# EUROPÄISCHE PATENTSCHRIFT

(11) **EP 0 688 995 B1**
(45) Veröffentlichungstag und Bekanntmachung des Hinweises auf die Patenterteilung: **06.05.1999**
(21) Anmeldenummer: 95107532.4
(22) Anmeldetag: 18.05.1995
(51) Int. Cl.: F16L 47/06

(54) **Dichtung für steckbare Kunststoffrohre**
Sealing for pluggable plastic pipes
Garniture pour tuyaux enfichables en matière plastique

(30) Priorität: 16.06.1994 DE 4420814
(43) Veröffentlichungstag der Anmeldung: 27.12.1995
(73) Patentinhaber: Bode GmbH, D-22549 Hamburg (DE)
(72) Erfinder: Bode, Michael, Dipl.-Ing., D-22609 Hamburg (DE)
(74) Vertreter: Hansmann, Dierk, Dipl.-Ing.

(56) Entgegenhaltungen:
- WO-A-86/00679
- DE-B- 1 924 410
- DE-B- 2 538 278
- GB-A- 1 158 358
- US-A- 4 218 208
- US-A- 4 368 894
- US-A- 4 602 792

## Beschreibung

Die Erfindung bezieht sich auf eine Dichtung für steckbare Kunststoffrohre, die von einem Rohrende aufnehmbar ist, das unter Warmverformung zur Ausbildung einer Sicke auf die Dichtung aufbringbar ist, wobei die Dichtung aus mindestens einem Hartteil und einem Weichteil zur Abdichtung ausgebildet ist und bei der das Hartteil und das Weichteil durch eine lösbare mechanische Verbindung koppelbar sind, und bei der sich sowohl das Hartteil als auch das Weichteil ringartig erstrecken sowie einander zur Bereitstellung einer mechanischen Klemmverbindung bereichsweise gegenseitig durchdringen.

Derartige Anordnungen sind in der Praxis bekannt, um eine fixierte Dichtung in einem Rohrende anzuordnen, um eine Aufnahme entsprechend der vorliegenden Dichtung in angepaßter Weise zu bilden. Bei diesen Dichtungen ist es erforderlich, daß in Aufziehrichtung des Rohrendes ein Hartteil zur Konturenstabilisierung angeordnet ist.

Bei derartigen Dichtungen, insbesondere bei großen Durchmessern, besteht das Problem, daß die beiden unterschiedlichen Materialen der Teile durch Vernetzung miteinander verbunden werden müssen. Hierzu muß eine Vielzahl von Bedingungen eingehalten werden, um eine ordnungsgemäße Verbindung zu gewährleisten.

Üblicherweise wird hierbei ein Elastomer als weicher Dichtungsteil mit einem Hartteil zur Fixierung aus Thermoplast vernetzt. Es sind somit aufwendige verfahrenspezifische Maßnahmen erforderlich, um eine Dichtung für diese Art der Anordnung herzustellen.

Ferner besteht der Mangel, daß bei einer fehlerhaften Ausbildung der Teile die Materialien wieder getrennt werden müssen und somit die ursprünglich geforderte gute Verbindung der Teile ein Werkstoffrecycling sehr aufwendig bzw. unmöglich macht.

Nach der WO-A-86 00 679 ist eine gattungsgemäße Ausbildung bekannt. Hierbei sind aber eine Vielzahl von Dichtelementen zusammengefügt, die eine aufwendige Vormontage erfordern, wobei auch ein relativ großes Elastomervolumen für Weichteile erforderlich ist. Auch ist der erforderliche Dorn zur Aufnahme der Dichtung für die Herstellung der Sicke am Rohrende unter Warmverformung schwer wieder entfernbar, so daß mit einem mehrteiligen Aufnahmedorn oder einem Spreizkern gearbeitet werden muß.

Gemäß der DE-B-1924 410 ist eine Verbindung einer zweiteiligen Dichtung aus einem Hartteil und einem Weichteil bekannt, die über eine Klemmverbindung verbunden sind. Der Einsatz dieser Dichtung erfolgt nicht entsprechend einer gattungsgemäßen Anordnung.

Aufgabe der Erfindung ist es bei einer gattungsgemäßen Ausbildung, die Zusammenstellung der Teile der Dichtung, insbesondere unter Berücksichtigung des Dichtungsmaterials, individuell nach Verwendungszweck vorzunehmen und beim Recycling bzw. der Entsorgung eine einfache Trennung der Materialien zu gewährleisten und die Fixierung der eingesetzten Dichtung in der Sicke beim Einstecken des weiteren Rohres auf einfache Weise zu ermöglichen.

Die Lösung dieser Aufgabe erfolgt erfindungsgemäß dadurch, daß das Weichteil entlang seines ringartigen äußeren Umfanges eine Verjüngung aufweist, die im Bereich ihrer dem äußeren Umfang abgewandten Begrenzung vom Hartteil abgestützt ist und daß das Weichteil im Bereich der Verjüngung eine verpreßbare Außenwölbung aufweist.

Hierdurch wird eine individuelle Zusammenfügung der Teile nach den Erfordernissen auf einfache Weise gewährleistet und somit auch eine Trennung zur Entsorgung bzw. Recycling ermöglicht. Gleichzeitig wird die Fixierung der Dichtung in der Sicke beim Einstecken des weiteren Rohres selbstätig vergrößert, so daß ein Herausdrücken des Weichteiles der Dichtung nicht möglich ist.

Weitere Ausgestaltungen der Erfindung sind durch Merkmale der Unteransprüche gekennzeichnet.

In der Zeichnung ist ein Ausführungsbeispiel der Erfindung schematisch dargestellt. Es zeigen:
- Fig. 1: einen Teillängsschnitt eines Rohrendes mit einer aufgenommenen Dichtung,
- Fig. 2: eine perspektivische Darstellung des Hartteiles der Dichtung gemäß Fig. 1,
- Fig. 3: eine perspektivische Darstellung des Weichteiles der Dichtung gemäß Fig. 1,
- Fig. 4: eine teilweise Darstellung eines Querschnittes durch ein mit einer Dichtung versehenes Rohrende, bei der zwischen dem Hartteil und dem Rohr eine Verjüngung zur Einklemmung des Weichteiles ausgebildet ist,
- Fig. 5: die Vorrichtung gemäß Fig. 4 in einer Darstellung, bei der schematisch das Weichteil mit seiner Außenkontur vor einer Verpressung durch das Rohrende dargestellt **und**
- Fig. 6: eine gegenüber Fig. 5 im Bereich des Weichteiles und des Hartteiles modifizierte Dichtung.

Die dargestellte Ausbildung zeigt die Wandung (1) eines Rohrendes, das auf eine Dichtung (2) in Richtung des Pfeiles (3) unter Warmverformung in bekannter Weise aufgeschoben und in das ein nicht näher dargestelltes Rohrende in Richtung des Pfeiles (4) einsetzbar ist. Dabei wird die Dichtung (2) in einer gebildeten Sicke (9) fixiert.

Die Dichtung (2) besteht in diesem Fall aus zwei Einzelteilen, wobei das eine Teil als Hartteil (5) zum Aufziehen des Rohrendes ausgebildet ist, während das andere Teil als Weichteil (6) zur Abdichtung zum aufgenommenen Rohrende dient.

In diesem Fall sind die beiden Teile (5,6) über korrespondierende Teile in Form einer Aufnahme (7) im Weichteil (6) und einem Verbindungsteil (8) am Hartteil (5) schwalbenschwanzartig miteinander verbunden und die Kontaktwandungen entsprechend ausgebildet. Durch die Aufnahme (7) im Weichteil (6) ist die Verbindung leicht herstellbar bzw. lösbar.

Hierdurch wird ermöglicht, daß unterschiedliche Dichtmaterialien für das Weichteil (6) einsetzbar sind und das andere Hartteil (5) beispielsweise immer die gleichen Materialsausbildung aufweist, so daß eine individuelle Dichtung für den jeweiligen Einsatzzweck geschaffen wird, die bedarfsweise zusammenzustellen ist.

Grundsätzlich ist das Weichteil (6) als ein Elastomer ausgebildet, das mit einer geringeren Härte als das Hartteil (5) versehen ist. Für das Weichteil (6) ist eine Härte von 50 bis 65 IRHD bzw. Shore A vorteilhaft.

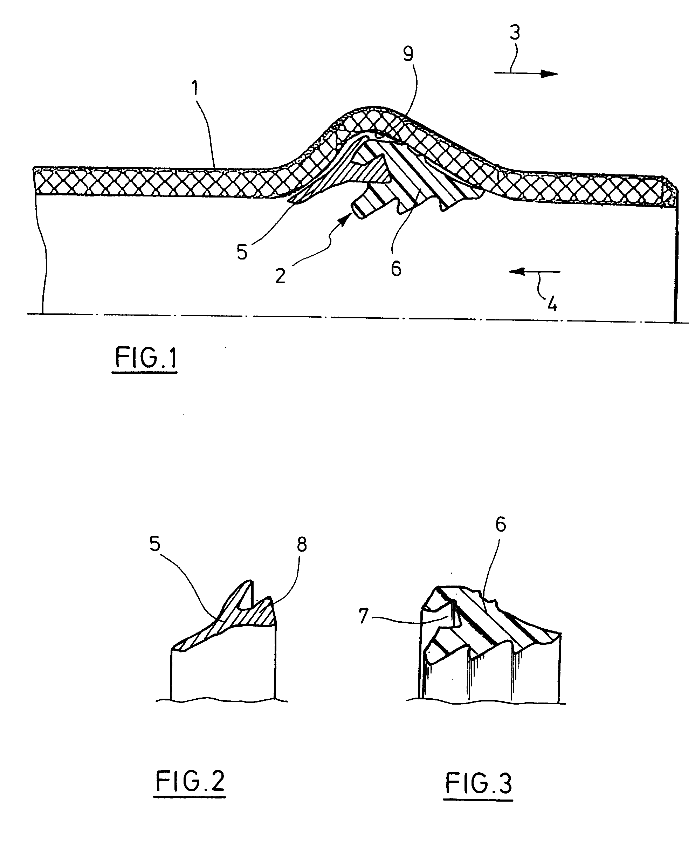

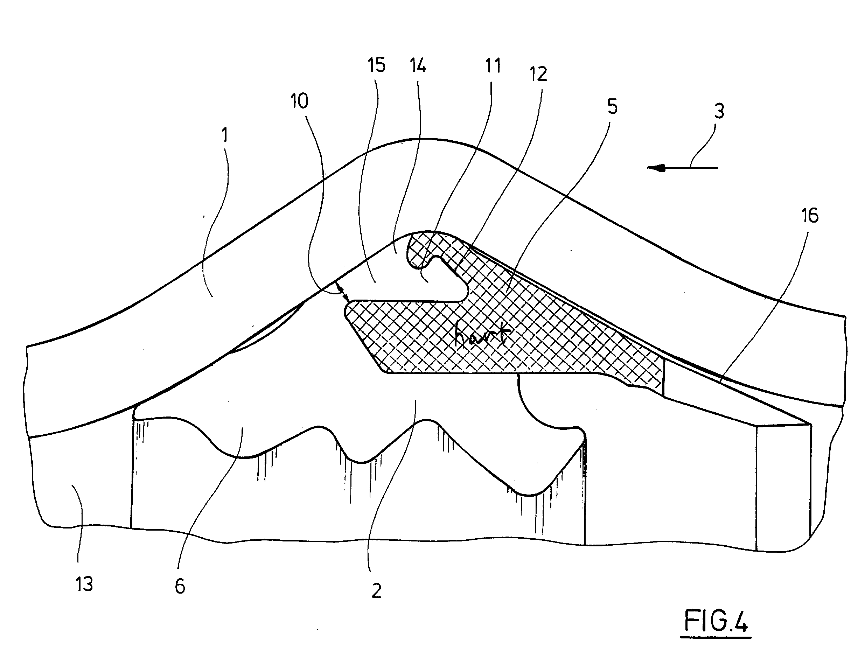

Fig. 4 zeigt eine weitere Ausführungsform, bei der zwischen der Wandung (1) und dem Hartteil (5) eine Verjüngung (10) ausgebildet ist, die das Weichteil (6) zwischen dem Hartteil (5) und der Wandung (1) einklemmt. Vor einem Aufschieben der Wandung (1) des Rohres in Richtung des Pfeiles (3) auf das Hartteil (5) der Dichtung (2) werden das Hartteil (5) und das Weichteil (6) miteinander kombiniert. Dies erfolgt durch Einführen einer schwalbenschwanzförmigen Verdickungsprofilierung (11) des Weichteiles (6) in einer korrespondierende Aufnahmeprofilierung (12) des Hartteiles (5). Es ist somit bezüglich der mechanisch ineinander greifenden Teile relativ zu den Figuren 1 bis 3 eine komplementäre Ausführungsform gewählt, da bei der Ausführungsform gemäß diesen Figuren das Hartteil (5) mit der schwalbenschwanzförmigen Erweiterung (8) und das Weichteil (6) mit der Aufnahme (7) versehen war.

Nach einem Einführen der Verdickungsprofilierung (11) in die Aufnahmeprofilierung (12) ist zwischen den Teilen (5,6) eine Verbindung bereitgestellt, die eine ausreichende Festigkeit aufweist, um Montagevorgänge durchzuführen. Diese Verbindung ist jedoch in der Regel nicht ausreichend fest, um auch hohen Belastungen bei einer Montage der Rohre zu widerstehen. Bei derartigen Montagen und insbesondere auch bei Demontagen treten erhebliche Kräfte in Richtung des Pfeiles (3) beziehungsweise entgegengesetzt zum Pfeil (3) auf, die dazu führen können, daß die Teile (5,6) voneinander getrennt werden. Um eine derartige Trennung zu vermeiden, ist die Verjüngung (10) vorgesehen.

In einem demontierten Zustand der Dichtung (2) ist die Verjüngung (10) nicht wirksam und die Teile (5,6) können mit geringem Kraftaufwand zusammengefügt werden. Erst bei einem Aufschieben des thermoplastisch erweichten Rohres mit seiner Wandung (1) auf die Dichtung (2) und nach einer Beaufschlagung eines Innenraumes (13) mit Unterdruck, der dazu führt, daß die Wandung (1) quer zur Richtung des Pfeiles (3) an das Weichteil (6) herangezogen wird, erfolgt die Ausbildung der Verjüngung (10) und das Einklemmen des Weichteiles (6). Durch die Kombination der Wandung (1) und des Hartteiles (5) in diesem Montagezustand wird wiederum eine schwalbenschwanzförmige Ausnehmung (14) bereitgestellt, die von der Wandung (1) einerseits und vom Hartteil (5) andererseits begrenzt ist. In diese Ausnehmung (14) ragt das Weichteil (6) mit seinem Kopplungsbereich (15) hinein. Die Verdickungsprofilierung (11) ist Teil des Kopplungsbereiches (15).

Das Hartteil (5) und das Weichteil (6) sind im wesentlichen als ringförmige Elemente ausgebildet, die sich symmetrisch entlang einer Mittellinie des Rohres erstrecken. Entgegen der Richtung des Pfeiles (3) vermindert sich der äußere Radius des vom Hartteil (5) ausgebildeten Ringes. Dies erleichtert ein Aufschieben der Wandung (1) in Richtung des Pfeiles (3) und führt beim Aufschieben zu einer Aufweitung des entsprechenden Endes der Wandung (1). Zur Führung der Wandung (1) während dieses Aufweitungsvorganges weist das Hartteil (5) eine Auflaufflanke (16) auf. Die Auflaufflanke (16) ist geneigt zur Richtung des Pfeiles (3) angeordnet. Nach einer abschließenden Formung des die Dichtung (2) umschließenden Endes des Rohres weist die Wandung (1) im Bereich des Weichteiles (6) ein Gefälle auf, das etwa der Steigung der Aufflaufflanke (16) entspricht. Grundsätzlich sind zwar auch unterschiedliche Steigungen realisierbar, die Verwendung gleichartiger Steigungen beziehungsweise Gefälle führt jedoch zu einer erhöhten Stabilität.

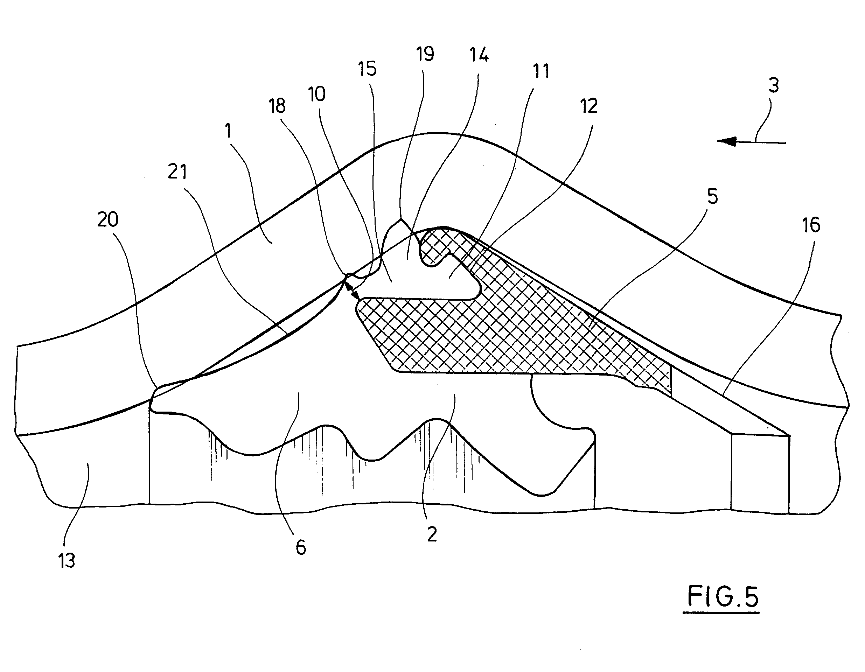

Fig. 5 zeigt in einer schematischen Darstellung die Ausbildung des Weichteiles (6) im Bereich seiner der Wandung (1) zugewandten Außenkontur vor einem Verpressen durch die Wandung (1). Es ist erkennbar, daß sowohl im Kopplungsbereich (15) als auch im Bereich der Verjüngung (10) Außenwölbungen (18,19) des Weichteiles (6) vorgesehen sind. Bei einem Vergleich mit Fig. 4 ist ersichtlich, daß diese Außenwölbungen (18,19) nach einem Anschmiegen der Wandung (1) derart verpreßt sind, daß der Bereich der Ausnehmung (14) vollständig ausgefüllt ist und daß das Material des Weichteiles (6) in die Ausnehmung (14) hineingepreßt wird.

Eine weitere Außenwölbung (20) ist im Bereich eines dem Hartteil (5) abgewandten Endes des Weichteiles (6) vorgesehen. Diese Außenwölbung (20) führt in Kombination mit einer Innenwölbung (21), die zwischen der Außenwölbung (20) und der Außenwölbung (18) lokalisiert ist, zu einem gesicherten Anliegen des dem Hartteil (5) abgewandten Endes an der Wandung (1). Hierdurch wird die Gebrauchsqualität weiter verbessert.

Als Material für das Hartteil (5) können unterschiedlich harte Kunststoffe verwendet werden. Insbesondere ist an einer Verwendung von Polypropylen gedacht. Für das Weichteil (6) kommen eine Vielzahl von Elastomeren in Frage.

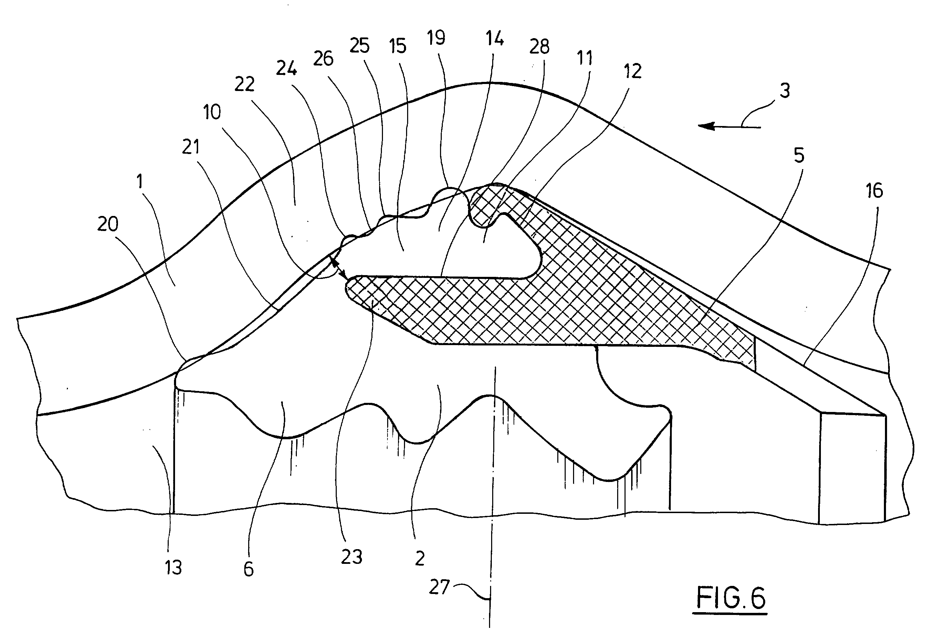

In Fig. 6 ist die Gestaltung des Hartteiles (5) und Weichteiles (6) gegenüber Fig. 5 leicht modifiziert. Hierdurch wird dem Effekt Rechnung getragen, daß bei einigen Anwendungen das Verringern des Durchmessers des Rohres nach dem Passieren der Auflaufflanke (16) durch Unterdruckbeaufschlagung im Bereich des Innenraumes (13) materialabhängig Probleme bereiten kann. Bei einer ungenügenden Verengung des Rohres, insbesondere im Bereich der Verjüngung (10), wird die Verjüngung (10) mit einer zu großen Ausdehnung versehen, was dazu führt, daß ein Herausziehen des Weichteiles aus der Ausnehmung (14) des Hartteiles (5) nicht immer vermieden werden kann.

Eine gegenüber Fig. 5 unvollständige Querschnittverminderung des Rohres, die zu einer Wandungswölbung (22) im Bereich der Wandung (1) führen kann, kann dadurch kompensiert werden, daß das Hartteil (5) im Bereich der Verjüngung (10) mit einer Verlängerung (23) versehen wird. Durch diese Verlängerung (23) wird die Ausnehmung (14) in Richtung des Pfeiles (3) verlängert. Zur Unterstützung einer Querschnittverminderung des Rohres nach einem Passieren der Auflaufflanke (16) wird die Außenwölbung (19) des Weichteiles (6) derart dimensioniert, daß in einer Querrichtung (27) eine Kuppe der Außenwölbung (19) nicht über einen Endbereich der Auflaufflanke (16) hinausragt. Insbesondere ist daran gedacht, die Kuppe der Außenwölbung (19) in Querrichtung (27) in Richtung auf die Ausnehmung (14) gegenüber der Kuppe der Auflaufflanke (16) etwas zurückzuversetzen.

Zur weiteren Unterstützung einer Verengung des Rohrdurchmessers ist die in Fig. 5 dargestellte Außenwölbung (18) bei der Ausführungsform gemäß Fig. 6 in zwei Außenwölbungen (24, 25) unterteilt, die von einer Zwischenmulde (26) voneinander getrennt sind. Die Außenwölbungen (24, 25) sind vorzugsweise derart angeordnet, daß die Zwischenmulde (26) entlang der Wandung (1) in Richtung auf die Ausnehmung (14) verschoben ist. Beispielsweise ist es möglich, die Außenwölbung (24) derart zu lokalisieren, daß eine Mittellinie der Außenwölbung (24) mit der Verjüngung (10) zusammenfällt. Gegenüber der Ausführungsform in Fig. 5 ist in Fig. 6 die Innenwölbung (21) flacher ausgebildet, um ebenfalls eine Anpassung an den Verlauf der Wandungswölbung (22) vorzunehmen und zu große Abstände zu vermeiden.

## Patentansprüche

1. Dichtung für steckbare Kunststoffrohre, die von einem Rohrende aufnehmbar ist, das unter Warmverformung zur Ausbildung einer Sicke auf die Dichtung aufbringbar ist, wobei die Dichtung aus mindestens einem Hartteil (5) und einem Weichteil (6) zur Abdichtung ausgebildet ist und bei der das Hartteil (5) und das Weichteil (6) durch eine lösbare mechanische Verbindung (7,8) koppelbar sind, und sich sowohl das Hartteil (5) als auch das Weichteil (6) ringartig erstrecken sowie einander zur Bereitstellung einer mechanischen Klemmverbindung bereichsweise gegenseitig durchdringen, dadurch gekennzeichnet, daß das Weichteil (6) entlang seines ringartigen äußeren Umfanges eine Verjüngung (10) aufweist, die im Bereich ihrer dem äußeren Umfang abgewandten Begrenzung vom Hartteil (5) abgestützt ist und daß das Weichteil (6) im Bereich der Verjüngung (10) eine verpreßbare Außenwölbung aufweist.

2. Dichtungselement nach Anspruch 1, dadurch gekennzeichnet, daß die mechanische Verbindung zwischen den Dichtungsteilen (5,6) durch korrespondierende Schwalbenschwanzelemente (7,8) gebildet ist.

3. Dichtungselement nach Anspruch 1 oder 2, dadurch gekennzeichnet, daß sich das Weichteil (6) ausgehend von der Verjüngung (10) schwalbenschwanzartig zu einem Kopplungsbereich (15) erweitert, der von einer korrespondierenden Ausnehmung (14) aufgenommen ist.

4. Dichtungselement nach einem der Ansprüche 1 bis 3, dadurch gekennzeichnet, daß das Hartteil (5) eine Aufnahmeprofilierung (12) aufweist, in die das Weichteil (6) schwalbenschwanzartig mit einer Verdickungsprofilierung (11) eingreift.

5. Dichtungselement nach einem der Ansprüche 1 bis 4, dadurch gekennzeichnet, daß das Weichteil (6) im Kopplungsbereich (15) eine verpreßbare Außenwölbung (19) aufweist.

6. Dichtungselement nach einem der Ansprüche 1 bis 5, dadurch gekennzeichnet, daß das Weichteil (6) im Bereich seines dem Hartteil (5) abgewandten Endes eine von der Wandung (1) beaufschlagbare Außenwölbung (20) aufweist.

7. Dichtungselement nach einem der Ansprüche 1 bis 6, dadurch gekennzeichnet, daß zwischen der Außenwölbung (18) und der Außenwandung (20) eine Innenwölbung (21) angeordnet ist.

8. Dichtungselement nach einem der Ansprüche 1 bis 7, dadurch gekennzeichnet, daß zwischen der Außenwölbung (20) und der Außenwölbung (19) zwei Außenwölbungen (24, 25) angeordnet sind, die durch eine Zwischenmulde (26) eineinander übergeleitet sind.

9. Dichtungselement nach einem der Ansprüche 1 bis 8, dadurch gekennzeichnet, daß die Außenwölbung (19) in einer Querrichtung (27) eine Dimensionierung in eine der Ausnehmung (14) abgewandte Richtung aufweist, die höchstens einem Abstand eines der Ausnehmung (14) zugewandten Endbereiches der Auflaufflanke (16) zu einer Grundlinie (28) der Ausnehmung (14) entspricht.

## Claims

1. Seal for plug-in type plastic pipes which can be received by a pipe end applied to the seal with thermal shaping to form a bead, the seal being formed by at least one rigid part (5) and one flexible part (6) for sealing purposes and in which the rigid part (5) and the flexible part (6) can be coupled by a releasable mechanical connection (7, 8) and both the rigid part (5) and the flexible part (6) extend annularly and penetrate one another in certain regions to produce a mechanical clamped connection, characterised in that the flexible part (6) has, along its annular outer periphery, a taper (10) which is supported by the rigid part (5) in the region of its boundary remote from the outer periphery and in that the flexible part (6) has a compressible external bulge in the region of the taper (10).

2. Sealing element according to claim 1, characterised in that the mechanical connection between the sealing parts (5, 6) is formed by mating dovetail elements (7, 8).

3. Sealing element according to one of claims 1 or 2, characterised in that the flexible part (6) widens from the taper (10) in the manner of a dovetail to a coupling region (15) which is received by a corresponding recess (14).

4. Sealing element according to one of claims 1 to 3, characterised in that the rigid part (5) has socket profiling (12) in which the flexible part (6) engages with a thickened profile (11) in the manner of a dovetail.

5. Sealing element according to one of claims 1 to 4, characterised in that the flexible part (6) has a compressible external bulge (19) in the coupling region (15).

6. Sealing element according to one of claims 1 to 5, characterised in that the flexible part (6) has, in the region of its end remote from the rigid part (5), an external bulge (20) which can be loaded by the wall (1).

7. Sealing element according to one of claims 1 to 6, characterised in that an internal bulge (21) is provided between the external bulge (18) and the external wall (20).

8. Sealing element according to one of claims 1 to 7, characterised in that two external bulges (24, 25) which are led over to one another by an intermediate trough (26) are arranged between the external bulge (20) and the external bulge (19).

9. Sealing element according to one of claims 1 to 8, characterised in that the external bulge (19) has, in a transverse direction (27), dimensioning in a direction turned away from the recess (14) which corresponds at most to a distance between an end region of the run-on flank (16) facing the recess (14) and a base line (28) of the recess (14).

## Revendications

1. Garniture d'étanchéité pour tuyaux enfichables en matière plastique qui peut être contenue dans une extrémité de tuyau qui, ayant été soumise à une déformation à chaud en vue de la formation d'une moulure, peut être placée sur la garniture d'étanchéité, la garniture d'étanchéité étant formée au moins d'un élément dur (5) et un élément mou (6) destiné à assurer l'étanchéité, garniture d'étanchéité dans le cas de laquelle l'élément dur (5) et l'élément mou (6) peuvent être accouplés par des moyens de fixation mécanique détachables l'un de l'autre (7,8) et dans le cas de laquelle tant l'élément dur (5) que l'élément mou (6) ont une allure annulaire et s'engagent réciproquement l'un dans l'autre par endroits pour assurer une fixation mécanique par serrage, la garniture d'étanchéité étant caractérisée en ce que l'élément mou (6) présente, suivant sa périphérie externe annulaire, une partie amincie (10) qui, dans la zone de sa limite opposée à la périphérie externe, est supportée par l'élément dur (5), et en ce que l'élément mou (6) présente, dans la zone de la partie amincie (10) un bombement vers l'extérieur qui peut être comprimé.

2. Garniture d'étanchéité suivant la revendication 1, caractérisée en ce que les moyens de fixation mécanique entre les éléments (5, 6) de la garniture d'étanchéité sont constitués par des éléments complémentaires en forme de queue d'aronde (7,8).

3. Garniture d'étanchéité suivant l'une ou l'autre des revendications 1 et 2, caractérisée en ce que l'élément mou (6) à partir de la partie amincie (10), s'élargit en forme de queue d'aronde pour former une partie d'accouplement (15) qui soit contenue dans un creux de forme complémentaire (14).

4. Garniture d'étanchéité suivant l'une quelconque des revendications 1 à 3, caractérisée en ce que l'élément dur (5) présente un creux profilé (12) dans lequel l'élément mou (6) s'engage en forme de queue d'aronde par une partie profilée épaissie (11).

5. Garniture d'étanchéité suivant l'une quelconque des revendications 1 à 4, caractérisée en ce que l'élément mou (6) présente, en sa partie d'accouplement (15), un bombement vers l'extérieur (19) qui peut être comprimé.

6. Garniture d'étanchéité suivant l'une quelconque des revendications 1 à 5, caractérisée en ce que l'élément mou (6) présente, dans la zone de son extrémité opposée à l'élément dur (5), un bombement vers l'extérieur (20) pouvant être sollicité par la paroi (10).

7. Garniture d'étanchéité suivant l'une quelconque des revendications 1 à 6, caractérisée en ce qu'entre un bombement vers l'extérieur (18) et le bombement vers l'extérieur (20), il a été prévu un bombement vers l'intérieur (21).

8. Garniture d'étanchéité suivant l'une quelconque des revendications 1 à 7, caractérisée en ce qu'entre le bombement vers l'extérieur (20) et le bombement vers l'extérieur (19), il a été prévu un deux bombements vers l'extérieur (24, 25), lesquels sont séparés l'un de l'autre par un creux intermédiaire (26) formant transition.

9. Garniture d'étanchéité suivant l'une quelconque des revendications 1 à 8, caractérisée en ce que le bombement vers l'extérieur (19), dans un sens transversal (27), présente, dans une direction allant en s'écartant du creux (14), une dimension qui correspond tout au plus à une distance qui sépare une zone d'extrémité du flanc de montée (16) tournée vers le creux (14) d'une ligne de base (28) de ce creux (14).
